# EUROPEAN PATENT SPECIFICATION

(11) **EP 1 833 712 B1**
(45) Date of publication and mention of the grant of the patent: **28.09.2011**
(21) Application number: 05846526.1
(22) Date of filing: 21.12.2005
(51) Int. Cl.: B62B 3/00, B62B 3/18

(54) **ROLL CAGE**
ROLLKÄFIG
CAGE ROULANTE

(30) Priority: 24.12.2004 GB 0428344
(43) Date of publication of application: 19.09.2007
(73) Proprietor: Linpac Allibert Limited, Birmingham B37 7YN (GB)
(72) Inventor: COPE, Andrew Christopher, West Midlands WS10 9DU (GB); MELIA, Michael J, Skelmersdale WN8 6UE (GB)
(74) Representative: Condon, Neil
(86) International application number: PCT/GB2005/005019
(87) International publication number: WO 2006/067474

(56) References cited:
- EP-A- 1 454 810
- WO-A-2004/080780
- AU-B2- 495 349
- GB-A- 2 024 735
- US-A- 3 840 242

## Description

The present invention relates to a roll cage.

Roll cages are widely used in the retail industry for storing and distributing goods to and within shops and other retail outlets. A typical roll cage consists of a wheeled, two- or three-sided cage mounted on a steel chassis, having either wheels or castors.

For example, one common type of roll cage has two side walls and a Z-shaped chassis, which allows the roll cage to be nested with other similar cages, so reducing the space occupied by empty cages. The roll cage may also include a hinged rear wall attached to one of the side walls, which can be folded flat against the side wall for nesting.

Another type of roll cage has a U-shaped chassis and a three-sided cage that includes a rear panel, two side panels attached to the edges of the rear panel with vertical hinges, and a square or rectangular base that is attached to the chassis with a horizontal hinge. The side panels and the base can be folded flat against the rear panel for nesting.

Optionally, the roll cage may include a pivotable shelf attached to the rear panel or one of the side panels to accommodate additional goods. The shelf can be folded against the panel for nesting. The fourth side of the cage is normally left open. However, the roll cage may optionally include a door that is hinged to one of the side panels and a top hinged to the upper edge of the rear panel, which can be closed and locked for secure storage of valuable goods.

The panels and the base, as well as the optional shelf, door and top are normally constricted from welded steel wire, welded to a tubular steel frame.

US 3840242 discloses a collapsible roll cage according to the preamble of claim 1 wherein the wheel supported base frame extends frontwardly from the collapsed shelves and side walls so that the entire assembly, while in the collapsed condition, is supported by the wheel supported frame and capable of nesting with another similar roll cage. The side and and hack panels of the roll cage may be made from welded wires, welded rod, expanded metal, or plastic or metal sheet material.

EP 1454 810 discloses a roll cage comprising at least one upwardly extending wall and at least one shelf configured for being moved between an essentially vertical position and an essentially horizontal position, in which it rests on a resting support. Essentially identical cooperating engagement means are provided at each side of the shelf and on the at least one wall, the engagement means comprise a slideway pin and a lock and guide means arranged on the shelf or the wall. The roll cage may be made of metal or plastic.

There are a number of problems associated with existing roll cages. First, they tend to be very noisy to use, as the panels and the base rattle loudly when the roll cage is moved around, and the base may be dropped heavily onto the chassis when a folded cage is being erected for use. This can cause environmental problems, particularly where shops are located in residential areas, and their use can be restricted by laws banning noisy activities at night or in the early hours of the morning. The existing roll cages are also prone to rust and damage, and repair costs are high owing to the welded construction of the cage components. Such roll cages are also quite heavy (for example 40-60 kg), which makes them difficult to move and has an impact on the useful payload that can be carried by delivery vehicles.

Another problem with existing roll cages is that they are awkward and time-consuming to erect and dismantle. To erect a folded roll cage, the side panels first have to be opened outwards beyond their final positions, to allow the base to be dropped down. The side panels are then lifted, rotated inwards and dropped into their final positions where they are latched to the base. Finally, the shelf is lifted and dropped into a horizontal position in which it engages latching elements on the side panels. This process has to be reversed when folding the roll cage for storage.

It is an object of the present invention to provide a roll cage that mitigates at least some of the aforesaid disadvantages. This object is solved by a roll cage according to claim 1.

There is provided a roll cage having a storage container mounted on a wheeled chassis, wherein the storage container can be folded for nesting and includes a rear support structure and a pair of side panels attached by substantially vertical hinges to the rear support structure, the rear support structure and the side panels being made wholly or substantially of a plastics material

We have found that by making the rear support structure and the panels of the roll cage from a plastics material, the roll cage can be made much quieter in use. This is because in a traditional wire roll cage, most of the noise arises from the base and the two side panels banging against one another and against the metal chassis. The plastics panels of the invention are softer than the traditional wire cage panels and do not resonate so much when banged or rattled, therefore making the roll cage much quieter to use. The plastics panels are also lighter than metal panels, they do not rust and they have good resistance to damage. Furthermore, fabrication costs are lower, as the panels can be moulded as individual units (for example by blow moulding) whereas the metal panels are constructed from many parts, which have to be welded together.

The roll cage is nestable: i.e. it can be nested with other compatible roll cages. The storage container can be folded for nesting, thereby reducing the space required for storage.

The storage container includes a rear support structure and a pair of side panels attached by substantially vertical hinges to the rear support structure. We have found that this structure meets or exceeds all the usual requirements for strength and rigidity, while being lighter and more durable than comparable metal roll cages.

Advantageously, the rear support structure and the panels are made primarily of medium density polyethylene (MDPE). Preferably, the rear support structure and the panels are made by blow moulding. Alternatively, the rear support structure and the side panels may be made by a twin sheet forming process. The rear support structure and the panels may optionally include reinforcing elements, for example of a rigid plastics material (e.g. pultruded polyethylene) or of metal.

The side panels and the rear support structure are attached by substantially vertical hinges. Advantageously, the hinges are formed integrally with the rear support structure and the side panels.

The roll cage preferably includes a base plate that is made wholly or substantially of a plastics material. The base plate may be attached to the rear support structure by a substantially horizontal hinge, which is preferably formed integrally with the rear support structure. Alternatively, the base plate may be attached to the chassis.

Advantageously, the storage container is constructed and arranged such that when it is in a folded configuration for nesting, the side panels are located between the rear support structure and the base plate. This arrangement allows the container to be erected for use very quickly and easily, with a minimal number of operations.

The roll cage preferably includes releasable locking elements for locking the side panels in an unfolded configuration. The releasable locking elements are preferably constructed and arranged to engage complementary locking formations on the base plate. The locking elements preferably comprise elongate rods vertically mounted for sliding movement in the free edges of the side panels. The locking elements may include handles accessible through openings in the edges of the side panels. This makes them easy to manipulate. The rods also serve to reinforce the side panels.

The roll cage preferably includes a shelf that is pivotally attached to the rear support structure, for adjustment between a horizontal loading position and a substantially vertical nesting position. The shelf is preferably made wholly or substantially of a plastics material. Advantageously, the shelf is adjustable between alternative horizontal positions, allowing it to be used either as a shelf or as a top for the container.

The shelf and the side panels preferably include complementary locking formations. The shelf then contributes to the rigidity of the container when it is in a loading condition, in particular by preventing the side panels from splaying under load.

Advantageously, the rear support structure is an integral component, formed by moulding, bending and welding. We have found that a rear support structure made by this method is extremely strong and rigid, as well as being simple to construct. The rear support structure may be formed by blow-moulding. Alternatively, a twin sheet forming process may be used.

According to another aspect there is provided a roll cage having a plurality of structural panels mounted on a chassis, wherein some or all of the panels are made wholly or substantially of a plastics material.

Certain embodiments of the invention will now be described, by way of example, with reference to the accompanying drawings, in which:
Figure 1 is an isometric view of a first roll cage in a loading configuration;
Figure 2 is an exploded isometric view of the first roll cage;
Figure 3 is a top plan view of the first roll cage in a nesting configuration;
Figure 4 is an isometric view of a rear support structure of the first roll cage;
Figure 5 is an isometric view of a moulded plastics preform, which is used in manufacture of the rear support structure;
Figure 6 is an isometric view showing part of a second roll cage with a locking mechanism in an unlocked configuration;
Figure 7 is an isometric view showing part of the second roll cage with the locking mechanism in a locked configuration;
Figure 8 is a side view showing part of the second roll cage with the locking mechanism in a locked configuration; and
Figure 9 is a side view showing part of the second roll cage with the locking mechanism in an unlocked configuration.

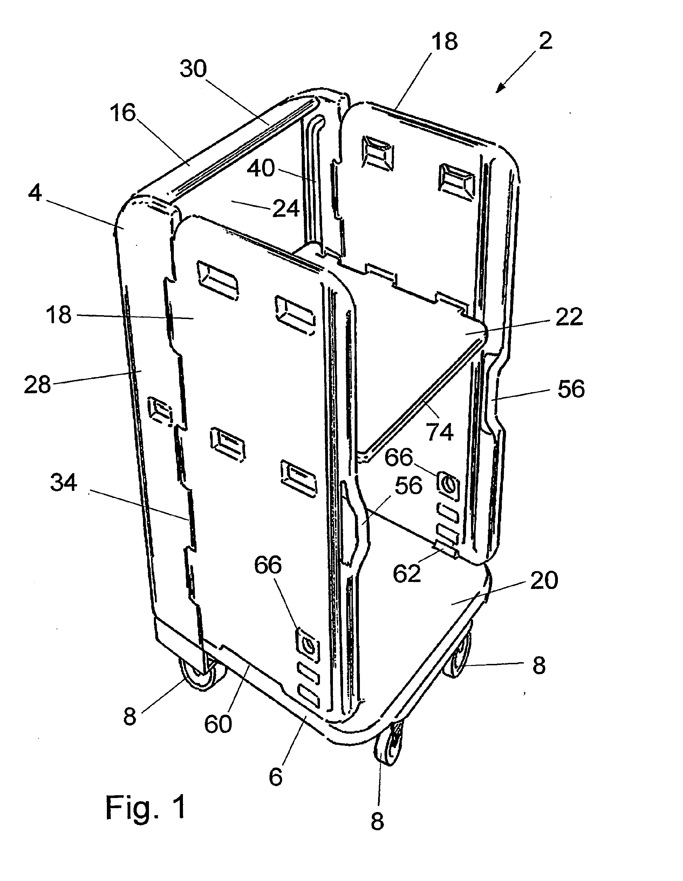

The roll cage 2 shown in figures 1 to 3 includes a three-sided storage container 4 mounted on a wheeled chassis 6, which is supported on four wheels or castors 8.

The chassis 6 is made of tubular steel and has a U-shaped configuration, comprising two convergent side members 10 and a cross-member 12 that interconnects the side members at the narrower end of the U-shaped chassis. This configuration allows two similar roll cages to be stored in a nested configuration, with the chassis of one of the roll cages being received partially within the space provided between the side members of the other roll cage. Two strengthening braces 14 interconnect the side members at the wider end of the chassis. These braces are attached to the upper surfaces of the side members 10, so that they do not impede the passage of a second roll cage that is nested within the first roll cage.

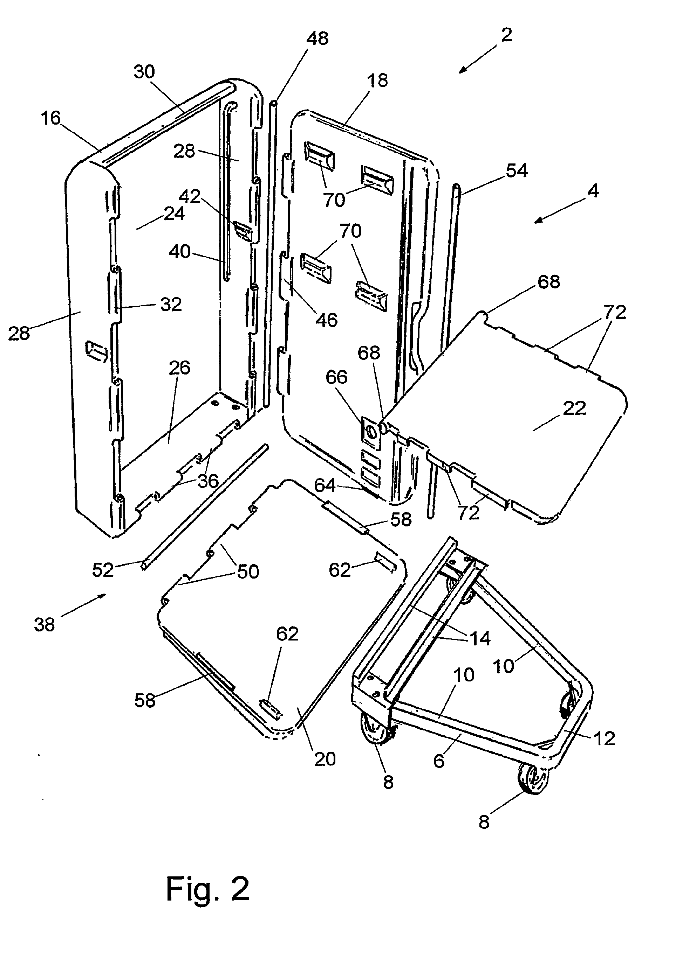

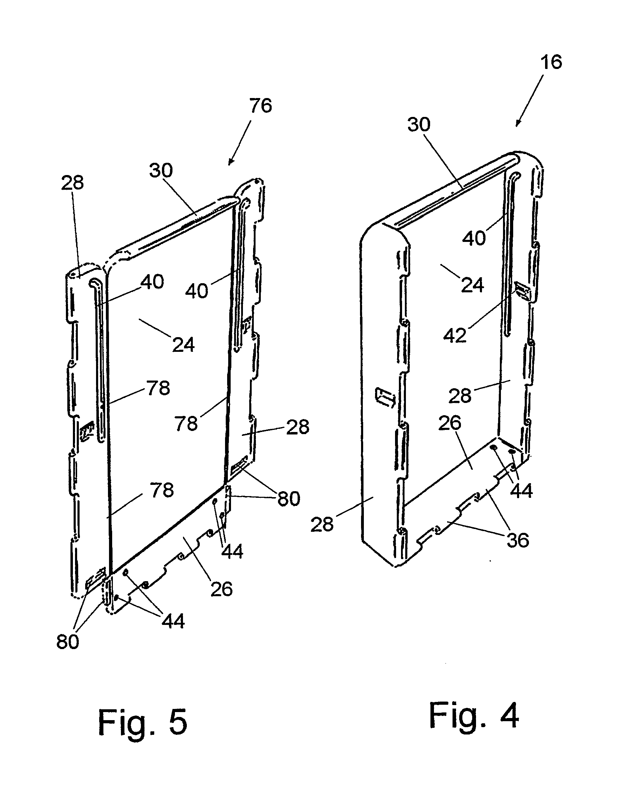

The storage container 4 that is mounted on top of the chassis 6 includes a rear support structure 16, two vertical side panels 18, a substantially rectangular base plate 20 and a pivoting shelf 22. In figure 2, one of the side panels 18 has been omitted, for clarity. The rear support structure 16, which is shown in more detail in figure 4, includes a substantially vertical rear panel 24, a horizontal rear base element 26 and two vertical rear side elements 28, which extend forwards substantially perpendicularly from the edges of the rear panel 24. The upper part 30 of the rear panel 24 is curved forwards and connected to the upper parts of the rear side elements 28. The rear support structure 16 therefore has a shallow vertical tray-like configuration.

Each of the rear side elements 28 is provided on its forward vertical edge with a set of enclosed channels 32. These channels form part of a pair of vertical piano hinges 34, through which the side panels 18 are connected to the rear side elements 28. The rear base element 26 is also provided on its forward vertical edge with a set of enclosed channels 36, which form part of a horizontal piano hinge 38 through which the base plate is connected to the rear base element.

Each of the rear side elements 28 is also provided on its inner face with an elongate substantially vertical groove 40, which extends downwards from near the upper end of the rear side element to approximately half its height. The upper part of the groove 40 is curved forwards. The groove 40 forms part of a pin and groove connection with the shelf 22. A support member 42 for the shelf is also provided on the inner face of each rear side element.

Bolt holes 44 are provided in the rear base element 26. Bolts (not shown) are inserted through these holes to attach the rear support structure to the chassis.

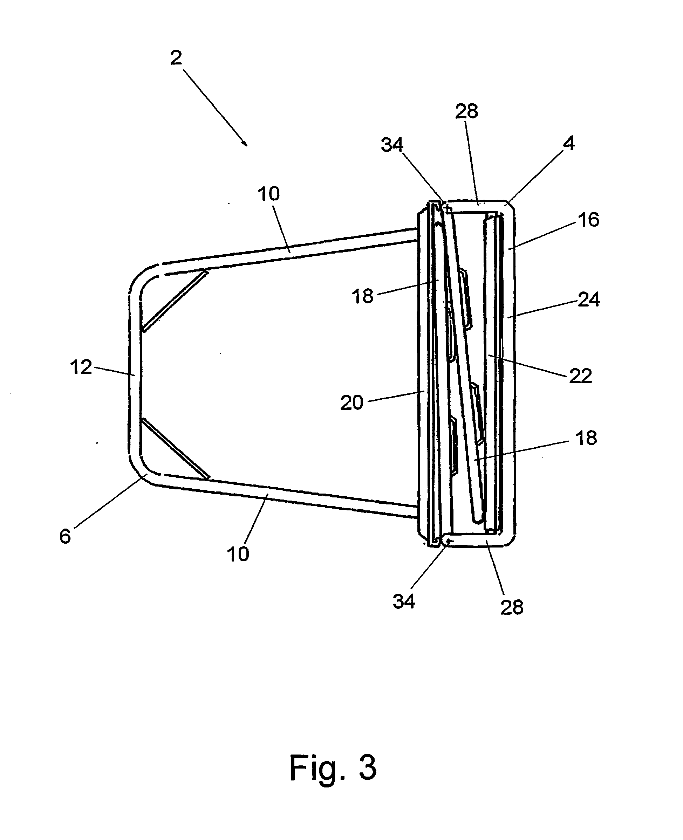

Each of the vertical side panels 18 is provided on its rear edge with a set of enclosed channels 46, which together with the corresponding channels 32 on the rear side elements and a pair of hinge pins 48 complete the vertical piano hinges 34. The vertical hinges allow the side panels 18 to be rotated from the loading condition shown in figure 1 to the folded nesting condition shown in figure 3. Likewise, the base plate 20 is provided on its rear edge with a set of enclosed channels 50, which together with the corresponding channels 36 on the rear base element 26 and a hinge pin 52 complete the horizontal piano hinge 38. The horizontal hinge allows the base plate 20 to be laid horizontally against the chassis 6 as shown in figure 1, or raised to a vertical position as shown in figure 3 in which it stands upright against one of the folded side panels 18. When the side panels and the base plate are in the folded condition as shown in figure 3, the roll cage can be nested with other similar cages, to reduce the space occupied by the cages.

Each of the side panels 18 includes a reinforcing element 54, which is embedded within the panel close to its forward edge. This reinforcing element may for example be made from a stiff plastics material (for example it may consist of a plastics tube made by pultrusion moulding method), or any other suitable material, for example it may be an aluminium tube. Some of the other panels and structures may also include reinforcing elements if required, or the reinforcement may be omitted entirely. Inset handles 56 are provided on the front edges of the side panels.

The base plate 20 includes on its upper surface adjacent each of its side edges an outer stop member 58 comprising a raised ridge with an inwardly facing flange. These stop members 58 engage complementary slots 60 in the lower edges of the side panels when they are in the loading condition as shown in figure 1, to prevent them from being opened outwards beyond that position. The upper surface of the base plate 20 also includes a pair of inner stop members 62, which are engaged by a releasable latching mechanism 64 in each of the side panels 18 to lock the side panels in the opened, loading condition. The latching mechanism 64, which may for example take the form of a simple drop bolt, may be released by lifting a release handle 66, thus allowing the side panels to be folded inwards for nesting. Strengthening formations (not shown), for example ribs and channels or corrugations, may be provided on the underside of the base plate 20 for additional strength.

The shelf 22 is substantially rectangular and includes adjacent its rear edge a pair of short pivot pins 68, which are engaged in the vertical grooves 40 provided in the inner faces of the rear side elements 28. This pin and groove mechanism allows the shelf 22 to be pivoted between a vertical nesting condition and a horizontal loading condition. The shelf 22 can also be repositioned vertically by sliding the pivot pins 68 along the grooves 40, so that it can be located at approximately half the height of the container for loading, or towards the top of the container where it acts as a lid or roof panel for the container. Two sets of support members 70 for the shelf are provided on the inner faces of the side panels, for supporting the shelf in each of these two positions. When the shelf 22 is in its lower horizontal position, it is also supported by the support members 42 on the inner faces of the rear side elements. Complementary support formations 72 are provided on the side edges of the shelf 22. These formations 70,72 also lock the side panels 18 to the shelf 22 to prevent splaying. A lip 74 may be provided on the front edge of the shelf 22 to prevent goods from sliding off. Strengthening formations, such as those described above, may be provided on the underside of the shelf.

When the shelf 22 is in its vertical nesting position, the pivot pins 68 are located at the bottoms of the grooves 40, slightly below the support members 42 on the inner faces of the rear side elements, and the support members 42 then engage the edges of the shelf to retain it in this vertical position. To reposition the shelf for loading, it is first lifted until the pivot pins 68 are level with the support members 42, and then pivoted to the horizontal position.

To change the roll cage from the loading configuration shown in figure 1 to the folded, nesting condition shown in figure 3, the shelf 22 is first lifted and dropped into a vertical position and the two side panels 18 are then unlatched and folded inwards, one after the other, so that they are positioned close to the rear panel 24, with the shelf 22 between the side panels 18 and the rear panel 24. Finally, the base plate 20 is lifted up to the vertical position, where it can if required be secured, for example with a catch (not shown). Changing the roll cage back to the unfolded loading condition involves reversing the above process.

Optionally, the roll cage may include a door (not shown), which is attached by a hinge to the forward edge of one of the side panels 18. This door can then be closed and locked and to protect any enclosed goods, for example against theft. At the same time, the shelf 22 can be located and locked in its upper position to serve as a roof panel.

The main structural panels of the storage container (i.e. the rear support structure 16, the side panels 18, the base plate 20 and the shelf 22) are preferably all made wholly or substantially of a plastics material such as medium density polyethylene (MDPE), although other plastics materials may also be suitable. The panels are preferably made by blow moulding. This results in a strong yet lightweight structure. Stitching points, where the two layers of the blow moulded panels are fused together, may be provided for added strength. Other moulding methods such as rotational moulding or injection moulding may also be suitable. Optionally, some or all of the panels may include reinforcing elements.

The rear support structure 16 cannot easily be moulded in its final form in a single moulding operation. It is preferred therefore to manufacture this structure by first moulding a preform 76 as shown in figure 5, in which the rear panel 24, the rear side elements 28 and the rear base element 26 are all formed in the same plane, with flexible hinge elements 78 connecting those components together. The rear base element 26 and the rear side elements 28 of the preform can then be folded forwards to form the final structure of the rear support structure 16, as shown in figure 4. After folding, the rear side elements 28 can be joined to the ends of the rear base element 26 and the curved upper part 30 of the rear support structure 16 by welding. If required, complementary locking formations 80 may be provided on the rear side elements and the rear base element.

Various modifications of the roll cage described above are of course possible. For example, the side panels 18 and the rear support structure 16 may include a number of apertures or windows, to reduce the weight of the roll cage and allow any contained goods to be seen. This can give the roll cage an attractive appearance, making it suitable for displaying goods in a store. The colour or colours of the panels can also be selected to match the store's corporate colours or decor. Logos, trade marks and advertising slogans can also be incorporated into the design of the panels. The roll cage may also include holders for displaying advertising or promotional materials.

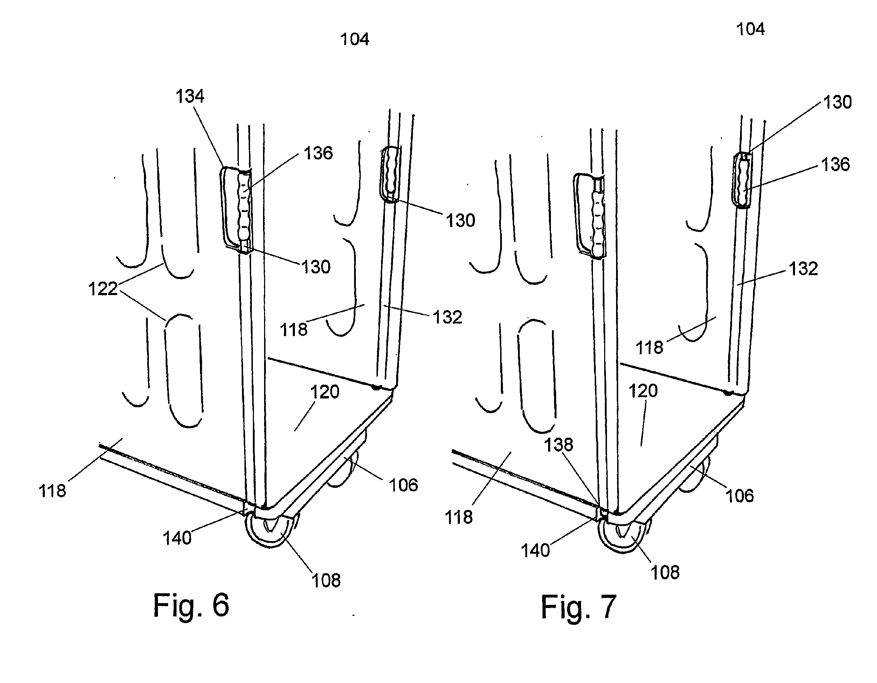

The second roll cage shown in figures 6 to 9 is similar in most respects to the first roll cage and includes a three-sided storage container 104 mounted on a wheeled chassis 106, which is supported on four wheels or castors 108. The storage container 104 includes a rear support structure (not shown), two vertical side panels 118, a substantially rectangular base plate 120 and a pivoting shelf (not shown). The side panels 118 are connected to the rear support structure by vertical hinges (not shown), which allow the side panels 118 to be rotated from the unfolded configuration shown in the figures to a folded configuration. Likewise, the base plate 120 is provided on its rear edge with a horizontal hinge (not shown) that allows the base plate to be raised to a vertical position for nesting. Each of the side panels 118 includes a number of windows 122 that allow the contained goods to be seen.

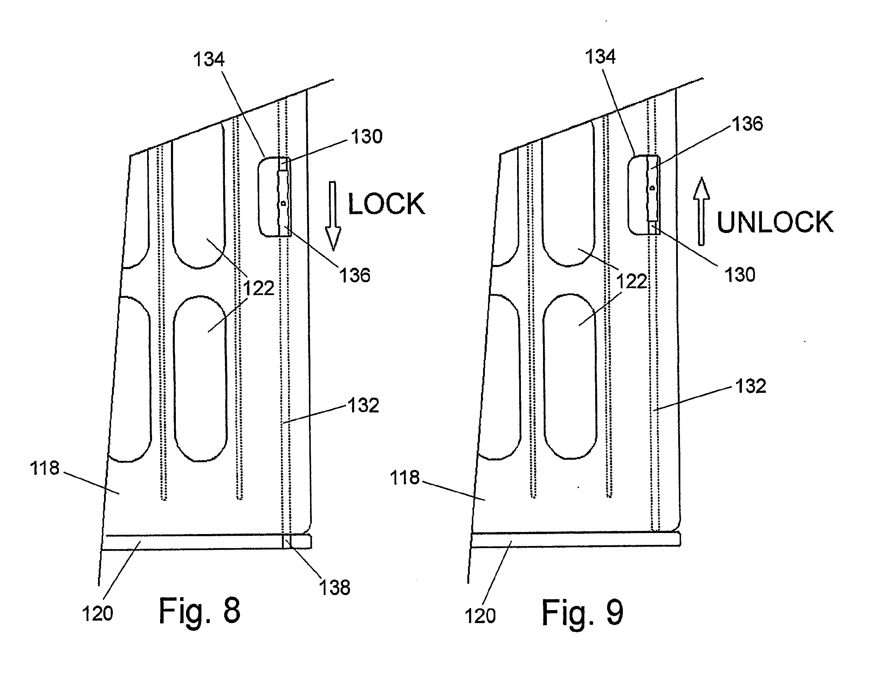

Each side panel 118 includes a locking mechanism comprising an elongate rod 130 that is vertically mounted for sliding movement in a channel 132, close to the free edge of the side panel. A recess 134 is provided in the free edge of the panel, allowing access to a handle 136 mounted on the rod 130. This allows the rod to moved upwards to an unlocked condition as shown in figures 6 and 9, or downwards to a locked condition as shown in figures 7 and 8. When the rod is in a locked condition, the lower end 138 of the rod protrudes below the bottom edge of the side panel 118 to engage a complementary locking formation 140, formed as a recess in the edge of the base plate 120. This arrangement allows the side panels to be unlocked and folded, or unfolded and locked in a single operation. The rod 130 also serves as a reinforcing element for the side panel 118. It may be made from a stiff plastics material, such as a plastics tube made by pultrusion, or any other suitable material: for example it may be an aluminium tube.

The chassis of the roll cage may take various different forms: for example it may have either a Z- or U-shaped configuration. Preferably, where the plastic roll cage is to be introduced gradually to replace existing metal roll cages as they become unserviceable, it should be compatible with those roll cages, so that they can be nested together.

The principles of construction disclosed herein are also applicable to other types of roll cage including, for example, roll cages having two side panels but no rear panel. In this latter case, it may only be necessary for the base plate to be hinged to allow nesting.

## Claims

1. A roll cage (2) having a storage container (4) mounted on a wheeled chassis (6), wherein the storage container (4) can be folded for nesting and includes a rear support structure (16) and a pair of side panels (18) attached by substantially vertical hinges (34) to the rear support structure (16), the rear support structure (16) and the side panels (18) being made wholly or substantially of a plastics material, and the roll cage (2) additionally comprises releasable locking elements (64) for locking the side panels (18) in an unfolded configuration, **characterised in that** the releasable locking elements (64) comprise elongate rods vertically mounted for sliding movement in the free edges of the side panels (18).

2. A roll cage (2) according to claim 1, wherein the rear support structure (16) and the side panels (18) are made by blow moulding.

3. A roll cage (2) according to claim 1, wherein the rear support structure (16) and the side panels (18) are made by a twin sheet forming process.

4. A roll cage (2) according to any one of the preceding claims, wherein the rear support structure (16) and the side panels (18) include reinforcing elements (54).

5. A roll cage (2) according to any one of the preceding claims, wherein the storage container (4) includes a base plate (20) that is made wholly or substantially of a plastics material.

6. A roll cage (2) according to claim 5, wherein the base plate (20) is attached by a substantially horizontal hinge (38) to the rear support structure (16).

7. A roll cage (2) according to claim 6, wherein the horizontal hinge (38) is formed integrally with the rear support structure (16) and the base plate (20).

8. A roll cage (2) according to claim 6 or claim 7, wherein the storage container (4) is constructed and arranged such that when it is in a folded configuration for nesting, the side panels (18) are located between the rear support structure (16) and the base plate (20).

9. A roll cage (2) according to any one of claims 5 to 8, wherein the releasable locking elements (64) are constructed and arranged to engage complementary locking formations on the base plate (20).

10. A roll cage (2) according to any one of the preceding claims, including a shelf (22) that is pivotally attached to the rear support structure (16), for adjustment between a horizontal loading position and a substantially vertical nesting position

11. A roll cage (2) according to claim 10 , wherein the shelf (22) is made wholly or substantially of a plastics material.

12. A roll cage (2) according to claim 10 or claim 11, wherein the shelf (22) is adjustable between alternative horizontal positions.

13. A roll cage (2) according to any one of claims 10 to 12, wherein the shelf (22) and the side panels (18) include complementary locking formations (70, 72).

14. A roll cage (2) according to any one of the preceding claims, wherein the rear support structure (16) is an integral component, formed by moulding, bending and welding.

## Patentansprüche

1. Rollkäfig (2) mit einem Lagerbehälter (4), der an einem Fahrgestell (6) angebracht ist, wobei der Lagerbehälter (4) zur Einschachtelung gefaltet werden kann und einen hinteren Stützaufbau (16) und ein Paar von Seitenplatten (18), die durch im Wesentlichen senkrechte Scharniere (34) am hinteren Stützaufbau (16) angebracht sind, umfasst, wobei der hintere Stützaufbau (16) und die Seitenplatten (18) zur Gänze oder im Wesentlichen aus einem Kunststoffmaterial bestehen und der Rollkäfig (2) zusätzlich lösbare Sperrelemente (64) umfasst, um die Seitenplatten (18) in einer entfalteten Gestaltung zu sperren, **dadurch gekennzeichnet, dass** die lösbaren Sperrelemente (64) längliche Stäbe umfassen, die zur Gleitbewegung in den freien Kanten der Seitenplatten (18) senkrecht angebracht sind.

2. Rollkäfig (2) nach Anspruch 1, wobei der hintere Stützaufbau (16) und die Seitenplatten (18) durch Blasformen hergestellt sind.

3. Rollkäfig (2) nach Anspruch 1, wobei der hintere Stützaufbau (16) und die Seitenplatten (18) durch einen Twin-Sheet-Formprozess hergestellt sind.

4. Rollkäfig (2) nach einem der vorhergehenden Ansprüche, wobei der hintere Stützaufbau (16) und die Seitenplatten (18) Verstärkungselemente (54) enthalten.

5. Rollkäfig (2) nach einem der vorhergehenden Ansprüche, wobei der Lagerbehälter (4) eine Basisplatte (20) umfasst, die zur Gänze oder im Wesentlichen aus einem Kunststoffmaterial hergestellt ist.

6. Rollkäfig (2) nach Anspruch 5, wobei die Basisplatte (20) durch ein im Wesentlichen waagerechtes Scharnier (38) am hinteren stützaufbau (16) angebracht ist.

7. Rollkäfig (2) nach Anspruch 6, wobei das waagerechte Scharnier (38) einstückig mit dem hinteren Stützaufbau (16) und der Basisplatte (20) ausgeführt ist.

8. Rollkäfig (2) nach Anspruch 6 oder 7, wobei der Lagerbehälter (4) so aufgebaut und angeordnet ist, dass sich die Seitenplatten (18) dann, wenn er sich in einer gefalteten Gestaltung zur Einschachtelung befindet, zwischen dem hinteren Stützaufbau (16) und der Basisplatte (20) befinden.

9. Rollkäfig (2) nach einem der Ansprüche 5 bis 8, wobei die lösbaren Sperrelemente (64) zum Eingriff mit komplementären Sperraufbauten an der Basisplatte (20) aufgebaut und eingerichtet sind.

10. Rollkäfig (2) nach einem der vorhergehenden Ansprüche, umfassend ein Regalfach (22), das schwenkbar am hinteren Stützaufbau (16) angebracht ist, um zwischen einer waagerechten seladestellung und einer im Wesentlichen senkrechten Einschachtelungsstellung verstellt zu werden.

11. Rollkäfig (2) nach Anspruch 10, wobei das Regalfach (22) zur Gänze oder im Wesentlichen aus einem Kunststoffmaterial besteht.

12. Rollkäfig (2) nach Anspruch 10 oder 11, wobei das Regalfach (22) zwischen alternativen waagerechten Positionen verstellbar ist.

13. Rollkäfig (2) nach einem der Ansprüche 10 bis 12, wobei das Regalfach (22) und die Seitenplatten (18) komplementäre Sperraufbauten (70, 72) umfassen.

14. Rollkäfig (2) nach einem der vorhergehenden Ansprüche, wobei der hintere Stützaufbau (16) ein einstückiger Bestandteil ist, der durch Formen, Biegen und Schweißen gebildet ist.

## Revendications

1. Cage roulante (2) comportant un conteneur de stockage (4) monté sur un châssis à roulettes (6), dans laquelle le conteneur de stockage (4) peut être replié en vue d'un emboîtage et comprend une structure de support arrière (16) et une paire de panneaux latéraux (18) fixés par des charnières essentiellement verticales (34) à la structure de support arrière (16), la structure de support arrière (16) et les panneaux latéraux (18) étant constitués en totalité ou essentiellement d'une matière plastique, la cage roulante (2) comportant, de plus, des éléments de verrouillage libérables (64) permettant de verrouiller les panneaux latéraux (18) dans une configuration non repliée, **caractérisée en ce que** les éléments de verrouillage libérables (64) comprennent des tiges de forme allongée montées verticalement en vue d'un mouvement de coulissement dans les bords libres des panneaux latéraux (18).

2. Cage roulante (2) selon la revendication 1, dans laquelle la structure de support arrière (16) et les panneaux latéraux (18) sont fabriqués par moulage par extrusion-soufflage.

3. Cage roulante (2) selon la revendication 1, dans laquelle la structure de support arrière (16) et les panneaux latéraux (18) sont fabriqués par un procédé de formage d'une double tôle.

4. Cage roulante (2) selon l'une quelconque des revendications précédentes, dans laquelle la structure de support arrière (16) et les panneaux latéraux (18) comportent des éléments de renforcement (54).

5. Cage roulante (2) selon l'une quelconque des revendications précédentes, dans laquelle le conteneur de stockage (4) comporte une plaque de base (20) qui est constituée en totalité ou essentiellement de matière plastique.

6. Cage roulante (2) selon la revendication 5, dans laquelle la plaque de base (20) est fixée par une charnière essentiellement horizontale (38) à la structure de support arrière (16).

7. Cage roulante (2) selon la revendication 6, dans laquelle la charnière horizontale (38) est formée de façon solidaire avec la structure de support arrière (16) et la plaque de base (20).

8. Cage roulante (2) selon la revendication 6 ou la revendication 7, dans laquelle le conteneur de stockage (4) est fabriqué et agencé de telle sorte que, lorsqu'il se trouve dans une configuration repliée en vue d'un emboîtage, les panneaux latéraux (18) sont placés entre la structure de support arrière (16) et la plaque de base (20).

9. Cage roulante (2) selon l'une quelconque des revendications 5 à 8, dans laquelle les éléments de verrouillage libérables (64) sont fabriqués et agencés affin de s'engager de façon complémentaire avec des structures de verrouillage situées sur la plaque de base (20).

10. Cage roulante (2) selon l'une quelconque des revendications précédentes, comportant une étagère (22) qui est fixée, de façon à pivoter, sur la structure de support arrière (16), en vue d'un ajustement entre une position horizontale de chargement et une position essentiellement verticale d'emboîtage.

11. Cage roulante (2) selon la revendication 10, dans laquelle l'étagère (22) est constituée en totalité ou essentiellement d'une matière plastique.

12. Cage roulante (2) selon la revendication 10 ou la revendication 11, dans laquelle l'étagère (22) est réglable entre des positions horizontales alternatives.

13. Cage roulante selon l'une quelconque des revendications 10 à 12, dans laquelle l'étagère (22) et les panneaux latéraux (18) comportent des structures de verrouillage complémentaires (70, 72).

14. Cage roulante (2) selon l'une quelconque des revendications précédentes, dans laquelle la structure de support arrière (16) est un composant en un seul bloc, formé par moulage, cintrage et soudage.
